Europäisches Patentamt

European Patent Office

Office européen des brevets

(11) Publication number: **0 292 165**
**A2**

## (12) EUROPEAN PATENT APPLICATION

(21) Application number: 88304158.4

(22) Date of filing: 09.05.88

(51) Int. Cl.⁴: **F16L 19/02 , F16B 39/32**

(30) Priority: 07.05.87 GB 8710808

(43) Date of publication of application:
**23.11.88 Bulletin 88/47**

(84) Designated Contracting States:
**AT BE CH DE ES FR GB IT LI NL SE**

(71) Applicant: **STANDARD HOSE LIMITED**
**Owler Ings Mill Owler Ings Road**
**Brighouse West Yorkshire HD6 1EJ(GB)**

(72) Inventor: **Anderson, Roderick Seaton**
**Birk House Farm Bailiffe Bridge**
**Brighouse West Yorkshire HD6 4JL(GB)**

(74) Representative: **Wharton, Peter Robert et al**
**Urquhart-Dykes & Lord Alliance House 29-31**
**Kirkgate**
**Bradford West Yorkshire, BD1 1QB(GB)**

(54) **Hose pipe.**

(57) A hose pipe comprises an outer sheath 28 and an inner liner of smooth plastics material 30 flared out at its end 32 and retained in an end fitting 12. An annular resilient 'O' ring 40 is located behind the flared face of the liner and the latter preferably held in place on the fitting 12, for example by swaging. Positioning the resilient component behind the flared end ensures that it does not come into contact with the fluid carried in the pipe and yet the presence of the 'O' ring ensures a good seal in the end fitting 12.

EP 0 292 165 A2

# HOSE PIPE

This invention relates to hose pipes and in particular relates to hose pipes intended to carry foodstuffs or other products for human consumption.

In any system where drinks, foodstuffs, medical preparations or the like are passed through piping it is important to avoid places within the system, not easily accessible, where deposits can build up since these are a potential breeding ground for bacteria and can present health hazards. Pipes and hoses for such systems generally have an inner liner made from a smooth bored tube of suitable plastics material, such as polytetrafluoroethylene. While this guards against deposits building up within the hose or pipe itself, it is usual for such pipes to have end fittings in order to connect them together or to other parts of the system, and the inner liner must be secure to the end fitting.

Our UK patent no. 2084697B discloses one solution to this problem in which an inner liner of smooth plastics material is flared out at its end and held captive within an annular recess of the end fitting.

However, one problem with such a design is that the sealing face of the fitting is the liner material, which, normally being polytetrafluoroethylene, is non-resilient so that the clamping force required to secure a pressure tight seal is so high tha the material is often deformed during tightening of the joint. This is an especially severe disadvantage with fittings which require frequent disconnection and reconnection in use since the deformation becomes progressively worse. The sealing problem is conventionally overcome by interposing a resilient gasket, usually rubber, between the sealing faces of the joint. This, however, introduces problems of its own since the resilient material of the gasket is usually not as chemically resistant as the liner material and may therefore be unsuitable if certain fluids are employed. Furthermore, the gasket may become lost, may inadvertently be left out in the making of the joint, or may be fitted incorrectly.

The invention seeks to provide a pipe with an end fitting improved in the above respects.

According to the present invention there is provided a pipe which comprises an outer sheath, an inner liner of smooth plastics material flared out at its end and retained in an end fitting characterised in that an annular resilient component is located behind the flared face of the liner.

Preferably the flared face of the liner is sealingly affixed to the end fitting and thus the resilient component is encapsulated by it. Conveniently, the flared face can be sealed by swaging a steel lip to compress and seal the lip of the flared face but it is envisaged that other sealing systems could be employed such as trapping the outer edge of the lip between screwed components of the fitting.

The annular resilient component may be, for example, an 'O' ring and is preferably retained, for example, in a groove.

The structure of the invention provides a simple but resilient sealing system, without crevices, where the need for compatibility of the resilient component does not arise since it is behind the liner, and no separate gasket is required.

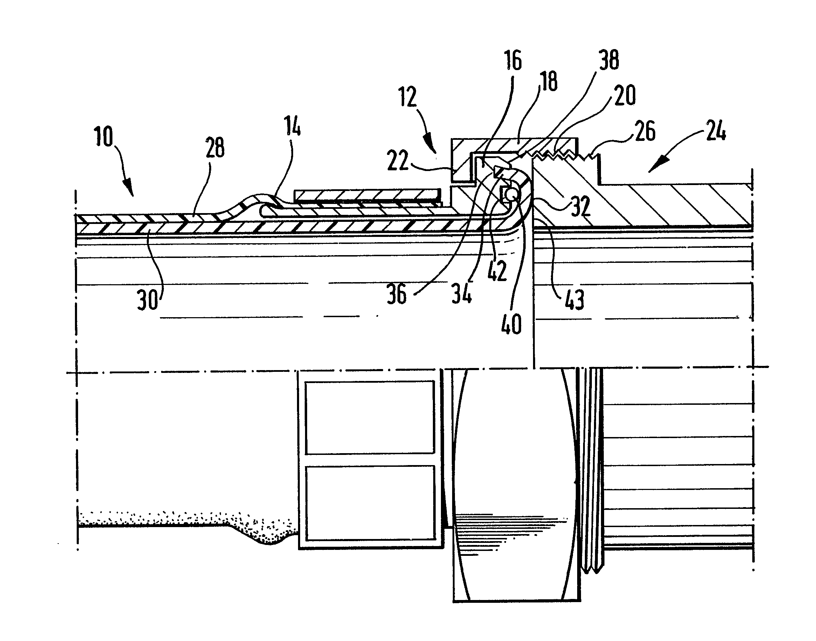

The invention will be described further, by way of example, with reference to the accompanying drawings, in which the sole figure is a side view, partly in section, of a pipe and end fitting in accordance with the invention.

Referring to the drawing, a pipe 10 is illustrated having an end fitting 12 of the type known as a 'female union fitting'. Briefly this comprises a cylindrical portion 4 and an outwardly directed flange 16. A nut having an internal threaded portion 20 is held captive on the flange 16 by means of an inwardly directed flange 22. A corresponding 'male' fitting 24 has an externally threaded portion 26 on to which the nut 18 may be screwed.

The pipe 10 comprises an outer sheath 28 and inner lner 30 of a chemically inert plastics material such as polytetrafluoroethylene. The liner 30 is flared out at its end 32 and its outer edge 34 is located in a recess 36 in the flange 16 and held in place by swaging the lip 38 so as to grip and sealingly fix the edge 34 of the liner 30 in place about the circumference of the fitting 12.

Located behind the end 32 of the liner 30 is an 'O' ring 40 of a resilient material such as rubber held in an annular groove 42 in the face of the flange 16. In the embodiment illustrated the 'O' ring 40 is completely encapsulated by the end 32 of the liner 30 and thus does not come into contact with the fluid passing through the pipe 10. Thus, the material of the 'O' ring 40 may be chosen for its physical properties without any constraints as to its chemical compatibility with the products flowing through the pipe 10.

In use, the joint is made in the same manner as with a conventional female union joint, by placing the fittings 12 and 24 together and screwing the nut 18 on to the threaded portin 26 until the mating face 32 of the liner 30 contacts the corresponding mating face 42 of the male fitting 24 forming a seal therebetween. The presence of the resilient component 40 enables the seal to be made without excessive tightening of the nut 18 which would lead to deformation of the material of the liner 30.

It can be seen that the construction of the invention involves no hidden crevices within the pipe 10 where food or other material can accumulate unseen. The only possible point at which an accumulation of material could arise is at the junction between the end 32 and the swage lip 38. This junction is not in contact with the fluid when the joint is made and can be readily cleaned e.g. by steam cleaning when the joint is taken apart since it is on an easily accessible end face.

It will be appreciated that the resilient component can be of any desired cross-sectional shape and, while it is preferred to retain it, for example as in the groove 42 illustrated, this is not necessary. Furthermore, while it is preferred to seal the outer edge 34 to the flange 16, e.g. by means of swaging, again this is not strictly necessary since, in use, the outer edge of the liner 30 is not in contact with the contents of the pipe owing to the seal being made radially inwardly of it.

While the invention has been illustrated with reference to a female union joint it will be appreciated that it is equally applicable to all types of end fitting, including both fixed and swivelling types. Moreover, the construction of the invention may be employed both on male and/or female fittings and indeed on any type of fitting where the seal is made between mating flat surfaces.

The seal of the invention has been found especially suitable when employed with the end fitting described in our co-pending patent application No. 8710807 filed herewith (reference P 41440 EP) which discloses a joint which comprises a rotatable nut having an internal screw thread loosely fitted and held captive on an internal flange having a sealing face, and adapted to mate with a part having an external screw thread and a complementary sealing face, characterised in that the bearing surface between the flange and the nut is reduced in friction.

While the invention has been described in relation to hoses in which the end fittings have Mating surfaces at right angles to the hose axis, it will be appreciated that it is equally applicable to cases where the surfaces are at other angles to the hose axis - including 0 or 180°, i.e. where the mating surfaces are in fact parallel to the hose axis.

## Claims

1. A pipe which comprises an outer sheath, 28, an inner liner 30 of smooth plastics material flared out at its end 32 and retained in an end fitting 12 characterised in that an annular resilient component 40 is located behind the flared face of the liner 30.

2. A pipe as claimed in claim 1 in which the flared face of the liner 30 is sealingly fixed to the end fitting 12.

3. A pipe as claimed in claim 2 in which the flared face is sealed by swaging a steel lip to compress and seal the lip of th flared face.

4. A pipe as claimed in any of claims 1 to 3 in which the resilient component 40 is an 'O' ring.

5. A pipe as claimed in claim 4 in which the 'O' ring is retained in a groove 42.

6. A pipe as claimed in any of claims 1 to 5 in which the end fitting 12 has mating surfaces at an acute angle to, or parallel with, the hose axis.